(19) Europäisches Patentamt
European Patent Office
Office européen des brevets

(11) **EP 3 165 878 A1**

(12) **EUROPEAN PATENT APPLICATION**
published in accordance with Art. 153(4) EPC

(43) Date of publication:
**10.05.2017 Bulletin 2017/19**

(51) Int Cl.:
*G01C 21/26* (2006.01)    *G06Q 50/10* (2012.01)

(21) Application number: **15814651.4**

(86) International application number:
**PCT/JP2015/060570**

(22) Date of filing: **03.04.2015**

(87) International publication number:
**WO 2016/002285 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **02.07.2014 JP 2014136700**

(71) Applicant: **Sony Corporation**
**Tokyo 108-0075 (JP)**

(72) Inventors:
• **GOTOH, Tomohiko**
**Tokyo 108-0075 (JP)**
• **WATANABE, Hideaki**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57) [Object] To generate more efficient navigation information for supporting the user's activities by using the activity log of the user.

[Solution] Provided is an information processing apparatus including: an activity log acquiring unit configured to acquire an activity log indicating a route group that includes routes which a plurality of users have passed through; a route extraction unit configured to extract an optimal route from the route group on the basis of a statistical index associated with the activity log; and an information presenting unit configured to provide information indicating the optimal route.

**FIG. 1**

EP 3 165 878 A1

## Description

Technical Field

The present disclosure relates to an information processing apparatus, an information processing method, and a program.

Background Art

Navigation systems for supporting a user's activities have been proposed in a variety of fields. For example, a technique for performing storage of position information with increased accuracy in a navigation system is proposed in Patent Literature 1.

Citation List

Patent Literature

Patent Literature 1: JP 2013-64620A

Non-Patent Literature

Summary of Invention

Technical Problem

In a navigation system as described in Patent Document 1, for example, a route is suggested depending on a condition such as a current location and destination of a user, and a transportation means, however, the route suggested in such a manner does not necessarily meet the user's demand. For example, the route suggested by the navigation system is not necessarily optimal when the user does not necessarily wish to arrive at the destination through the shortest path, and more specifically, when the user is travelling for sightseeing or the like.

Accordingly, the present disclosure proposes a novel and improved information processing device, information processing method, and program capable of generating more effective navigation information for supporting a user's activities by using an activity log of the user.

Solution to Problem

According to an embodiment of the present disclosure, there is provided an information processing apparatus including an activity log acquiring unit configured to acquire an activity log indicating a route group that includes routes which a plurality of users each passed through, a route extraction unit configured to extract an optimal route from the route group on the basis of a statistical index associated with the activity log, and an information presenting unit configured to provide information indicating the optimal route.

According to another embodiment of the present disclosure, there is provided an information processing method including a step of acquiring an activity log indicating a route group that includes routes which a plurality of users each passed through, a step of extracting, by a processor, an optimal route from the route group on the basis of a statistical index associated with the activity log, and a step of providing information indicating the optimal route.

According to another embodiment of the present disclosure, there is provided a program allowing a computer to implement a function configured to acquire an activity log indicating a route group that includes routes which a plurality of users each passed through, a function configured to extract an optimal route from the route group on the basis of a statistical index associated with the activity log, and a function configured to provide information indicating the optimal route.

Advantageous Effects of Invention

According to the example embodiments of the present disclosure described above, more efficient navigation information for supporting the user's activities can be generated by using the activity log of the user.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 illustrates a schematic configuration of a system according to a first embodiment of the present disclosure.
[FIG. 2] FIG. 2 illustrates a first example of a user interface provided by a planning app in the first embodiment of the present disclosure.
[FIG. 3] FIG. 3 illustrates a second example of a user interface provided by a planning app in the first embodiment of the present disclosure.
[FIG. 4] FIG. 4 illustrates a third example of a user interface provided by a planning app in the first embodiment of the present disclosure.
[FIG. 5A] FIG. 5A illustrates extraction of a route in the first embodiment of the present disclosure.
[FIG. 5B] FIG. 5B illustrates extraction of a route in the first embodiment of the present disclosure.
[FIG. 5C] FIG. 5C illustrates extraction of a route in the first embodiment of the present disclosure.
[FIG. 6] FIG. 6 illustrates evaluation of a route in the first embodiment of the present disclosure.
[FIG. 7] FIG. 7 illustrates an example of a user interface provided by a planning app in a second embodiment of the present disclosure.

[FIG. 8] FIG. 8 illustrates an example of a user interface displaying a route generated in the second embodiment of the present disclosure.

[FIG. 9] FIG. 9 illustrates an example of information additionally displayed in the user interface shown in FIG. 8.

[FIG. 10] FIG. 10 illustrates an example of a user interface presented by a log display function in the second embodiment of the present disclosure.

[FIG. 11] FIG. 11 illustrates an example of a user interface according to another embodiment of the present disclosure.

[FIG. 12] FIG. 12 illustrates an example of a user interface according to still another embodiment of the present disclosure.

[FIG. 13] FIG. 13 is a block diagram showing a hardware configuration of an information processing apparatus according to an embodiment of the present disclosure.

Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description will be given in the following order.

    1. First Embodiment
    1-1. System Configuration
    1-2. Example of a User Interface
    2. Second Embodiment
    3. Another Embodiment
    4. Hardware Configuration
    5. Supplement

(1. First Embodiment)

(1-1. System Configuration)

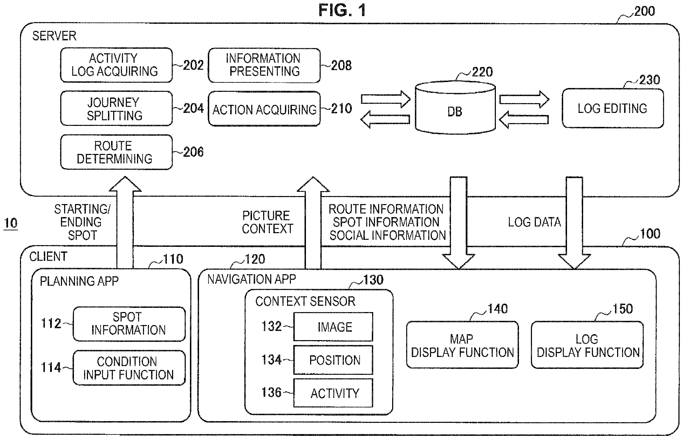

FIG. 1 illustrates a schematic configuration of a system according to a first embodiment of the present disclosure. Referring to FIG. 1, a system 10 includes a client 100 and a server 200. The client 100 provides a planning app (application software) 110 and a navigation app 120. The server 200 performs information processing for providing service by the apps described above on the client 100.

(Client Configuration)

The client 100 is implemented by, for example, a terminal device, such as a smartphone, a tablet, or a personal computer (PC). Note that an example hardware configuration of the terminal device is described later as an example hardware configuration of the information processing apparatus. The client 100 may include a first terminal device configured to provide the planning app 110 and a second terminal device configured to provide the navigation app 120. In this case, while the second terminal device may be a mobile device carried by a user, a wearable device worn by the user, or the like, the first terminal device may be a device other than such devices and may be a stationary terminal device, such as a television or a desktop PC. When the planning app 110 and the navigation app 120 are provided by the same terminal device, the terminal device may be a mobile device, a wearable device, or the like.

As described below, the client 100 presents various information to the user and receives operation input from the user. To that end, the client 100 may be provided with an input/output unit, or an input/output device may be externally connected to the client 100. The client 100 may be implemented by a combination of a plurality of devices, such as, for example, a combination of an input/output device and an information processing apparatus configured to process information inputted and outputted and exchange the information with the server 200. For example, if the client 100 is implemented by a terminal device including a smartphone, the smartphone may implement the entire functionality of the client 100, or the functionality of the client 100 may be implemented by a combination of a wearable device that is used as the input/output device and the smartphone.

The planning app 110 presents spot information 112 and has a condition input function 114. The spot information 112 is information provided from the server 200 indicating a geographical spot defined in an area where the user is about to engage in activities. For example, when the user is about to go sightseeing in a town, the spot information 112 may be provided that indicates a transport hub, such as a station or a bus terminal, a sightseeing spot, a shopping district, a hotel, and the like which would serve as a starting point for the activities. The spot information 112 may also include additional information such as an image and/or an explanation associated with each spot, an average sojourn time at each spot, a distance or an average travelling time between spots, or an image taken or a social media post done by the other user in connection with a spot.

The user inputs a desired condition using a condition input function 114 with reference to the spot information 112. The condition may include, for example, a departure point or a destination (which may be the spots described above) of a route for visiting spots successively, a spot that the user wishes to visit, the user's preference on spots, a starting time and an ending time (or a required time) of the entire route, or the like. Note that more specific examples of a user interface that the client 100 provides by the condition input function 114 will be described later.

The navigation app 120 includes a context sensor 130, a map display function 140, and a log display function 150. The navigation app 120 provides the user with navigation in real time in accordance with a route automatically generated by the server 200 on the basis of the condition inputted on the planning app 110.

The context sensor 130 includes an image sensor 132, a position sensor 134, and an activity sensor 136. The image sensor 132 includes, for example, a camera which is provided in a terminal device implementing the client 100. The image sensor 132 may acquire an image when acquisition of the image is instructed by a user operation or may continuously acquire a view image of the user, for example, like a camera which is mounted on a wearable device. The position sensor 134 includes, for example, a receiver of a positioning system such as Global Navigation Satellite System (GNSS) including Global Positioning System (GPS), a communication device implementing base station positioning, or the like and detects a position of the client 100 carried or worn by the user. The activity sensor 136 includes an acceleration sensor, a gyro sensor, a geomagnetic sensor, and/or a barometric sensor, or the like and acquires sensor data for recognizing the user's activity with an activity recognition technology.

The functions of the sensors described above allow the context sensor 130 to provide information including an image such as a photograph acquired by the user or a context of the user's activity to the server 200. The context of the activity may be defined on the basis of, for example, faces, dishes, or landscapes included in images acquired during the activity, types of sound acquired during the activity, the latitude and longitude of the position where the activity occur, a sojourn or travelling, the attribute of the place, the weather, the travel means, the accompanying person, or the like.

The map display function 140 displays a map for navigation in accordance with information provided by the server 200. For example, the map may display information such as a route the server 200 automatically generated, a spot on the route or around the route, or a post of the other user associated with the route or the spot. The map displayed by the map display function 140 may be updated whenever necessary depending on, for example, progress of the route, the user changing the route, information associated with the route or the spot updated, or the like.

The log display function 150 causes the activity log of the user to be displayed in accordance with information provided by the server 200. The log includes, for example, a spot where the user has visited, a photograph that the user took at the spot, a social media post, or the like. The user can look back on the activities of the day by referring to the log after finishing the activities of the day, for example. The log may also be shared with the other user.

(Server Configuration)

The sever 200 is implemented by one or more server devices on a network. Note that an example hardware configuration of the server device is later described as an example hardware configuration of the information processing apparatus.

The server 200 includes an activity log acquiring unit 202, a journey splitting unit 204, a route determining unit 206, an information presenting unit 208, and an action acquiring unit 210, a database (DB) 220, and a log editing unit 230. Each unit other than the DB 220 is implemented by a communication device and a processor provided in the server device, for example. The DB 220 is implemented by a storage or a memory provided in the server device.

The activity log acquiring unit 202 acquires the activity log of the user. The activity log may be acquired by a similar sensor to the context sensor 130 described above, for example, or may be acquired by a simpler sensor. The activity log includes a history of the position information of the user, for example. Additionally, the activity log may include an image acquired along with the user's activity, context of the user's activity, or the like. Here, the user providing the activity log to the activity log acquiring unit 202 may include one or more users other than the user using the planning app 110 or the navigation app 120. These users may have already visited a geographical spot that the user using the planning app 110 or the navigation app 120 is to visit, for example. Accordingly, in other words, the activity log acquiring unit 202 acquires the activity log of the user who has visited one or more geographical spots successively. The user described above may also include a plurality of users. Each user passes through a common route or a route that differ from each other when visiting the geographical spots, for example. In such cases, it can be said that the activity log indicates a route group including routes which a plurality of users each passed through.

The journey splitting unit 204 splits a journey of the user indicated by the activity log acquired by the activity log acquiring unit 202. More specifically, the journey splitting unit 204 identifies geographical spots that the user has visited during the journey indicated by the activity log and splits the journey into a leg corresponding to a sojourn at a spot and a leg corresponding to travelling between spots. In this case, the journey splitting unit 204 may automatically identify the region which is indicated that the user is in a sojourn state by position information included in the activity log, or activity recognition information, or the like as the geographical spot. Alternatively, the journey splitting unit 204 may preliminarily acquire information of the region corresponding to the geographical spot by using an external Point Of Interest (POI) service, for example. The journey splitting unit 204 may calculate a sojourn time of the user at each spot and a required travelling time between spots by splitting the journey into a sojourn leg and a travelling leg. For example, the sojourn time may be calculated on the basis of time which is indicated by the activity log that the user is positioned within the region corresponding to the spot. Information of the geographical spot, and the sojourn time or the required time identified here may be used for processing in the route determining unit 206 described later.

Hereinafter, a user providing the activity log to the activity log acquiring unit 202 is described as a first user, and a user using the planning app 110 or the navigation app 120 is described as a second user. The first user and the second user may be different users. Alternatively, if the activity log acquires an activity log that has previously been provided by the second user, it may be construed as the first user includes the second user.

The route determining unit 206 determines a route for the second user to visit geographical spots successively on the basis of the activity log of the first user acquired by the activity log acquiring unit 202. Here, the geographical spots that the second user is to visit may be some or all of the geographical spots that the first user has visited. The activity log may include logs when a plurality of users each have visited different spots. Accordingly, when the sufficient number of activity logs are acquired, it may be possible to cover spots that are likely to be visited by the user in an area, for example. The route determining unit 206 receives selection, from such spot groups, of spots to be a departure point and a destination of the route, a starting time and an ending time, and must-see spots to be visited by all means, in accordance with operation input of the second user through the condition input function 114 of the planning app 110, for example. When the selection of the must-see spots is made, the route determining unit 206 determines a route for successively visiting the must-see spots and the other spots possible to visit additionally between the starting time and the ending time. Information of the sojourn time of the user at each spot or the required travelling time between spots calculated in the journey splitting unit 204 may be used for such determination of the route.

As described above, the activity log of the first user acquired by the activity log acquiring unit 202 may include logs when a plurality of users each have visited different spots. Accordingly, for example, there may be the case that geographical spots that the first user has visited include a first spot, a second spot, and a third spot, and the first user includes a user traveled from the first spot to the second spot and a user traveled from the second spot to the third spot. In such cases, the route determining unit 206 may determine a route from the first spot to the second spot and a route from the second spot to the third spot on the basis of routes which users different from each other each passed through.

Here, for example, if the geographical spot that the first user has visited includes the first spot and the second spot, and the first user includes a plurality of users traveled from the first spot to the second spot, the activity log may indicate a route group including routes which a plurality of users each passed through when travelling from the first spot to the second spot. In such cases, the route determining unit 206 extracts a route for the second user to travel from the first spot to the second spot from the route group described above. In this case, the route determining unit 206 may extract an optimal route on the basis of a statistical index associated with the activity log. For example, the statistical index includes the number of users passed through each of the route included in the route group. In this case, the route determining unit 206 may extract a route which is passed through by more users as the optimal route. Further, for example, the statistical index includes a quantity of activities of the plurality of users occurred on the routes included in the route group. In this case, the route determining unit 206 may extract a route on which more quantity of activities has occurred as the optimal route. The activities may include photographing, social media posting, or the like.

Note that in the case described above, the route determining unit 206 may change the index for extracting the optimal route depending on an attribute or a purpose of the second user. For example, the index may be changed depending on whether the second user wishes to visit more spots efficiently or wishes to visit fewer spots thoroughly. For example, when the user wishes to visit more spots, a route that has a short distance or a short required time may be selected instead of a route that has more photographing or social media posting. Further, the route determining unit 206 may extract any one of the routes included in the route group as the optimal route or may extract the optimal route by connecting at least a part of the routes included in the route group together.

The information presenting unit 208 provides information indicating the route determined by the route determining unit 206 to the second user. The information presenting unit 208, for example, may provide information as a result of planning in the planning app 110 (the route automatically generated) or may provide information as an object of navigation in the navigation app 120. Note that more specific examples of a user interface for providing information indicating the route by the planning app 110 or the navigation app 120 will be described later.

Furthermore, the information presenting unit 208 may provide, in addition to the information indicating the route, additional information extracted from the activity log of the first user acquired by the activity log acquiring unit 202 to the second user. For example, the information presenting unit 208 may provide information such as a spot name, an explanation, or an image obtained by using external POI service, for example, on the geographical spot identified in the journey splitting unit 204. Further, the information presenting unit 208 may provide information indicating an activity of the first user occurred on the routes (not necessarily the route determined by the route determining unit 206) included in the route group indicated by the activity log. As described above, the activity of the first user includes, for example, photographing or social media posting. Such information, for example, may be presented as the spot information 112 in the planning app 110 or may be presented in the map display function 140 in the navigation app 120.

The action acquiring unit 210 acquires an action of the second user on information provided by the information presenting unit 208. For example, the action acquiring unit 210 acquires a condition inputted by using the condition input function 114 and an instruction for automatic generation of the route by the second user who referred to the information presented as the spot information 112 in the planning app 110. The action acquiring unit 210 provides these conditions or instruction to the route determining unit 206, and the route determining unit 206 starts determination process of the route on the basis of these conditions or instruction. Further, for example, the action acquiring unit 210 may acquire information presented in the map display function 140 in the navigation app 120, for example, an action of the second user on information indicating activity of the first user on the route. This action may indicate, for example, that the information presents an interest to the second user. In such cases, the route determining unit 206 may re-execute the determination of the route for the second user on the basis of information of the action provided from the action acquiring unit 210. In this case, the action by the second user may be indicative of change or addition of a destination or a via-point of the route.

The DB 220 stores various data to be handled by the server 200. For example, the DB 220 stores the activity log acquired by the activity log acquiring unit 202. Further, the DB 220 stores the activity log of the user provided by the context sensor 130. An activity log of a user provided by the context sensor 130 may be read from the DB 220 by the activity log acquiring unit 202 and used for determination of the route for the other user. Further, the activity log stored in the DB 220 is used when editing the log by the log editing unit 230.

The log editing unit 230 edits a log to be displayed by the log display function 150 of the navigation app 120. The log editing unit 230 edits the log on the basis of position information of the user, an image such as a photograph, a social media post, and context of the other activity provided by the context sensor 130.

(1-2. Example of a User Interface)

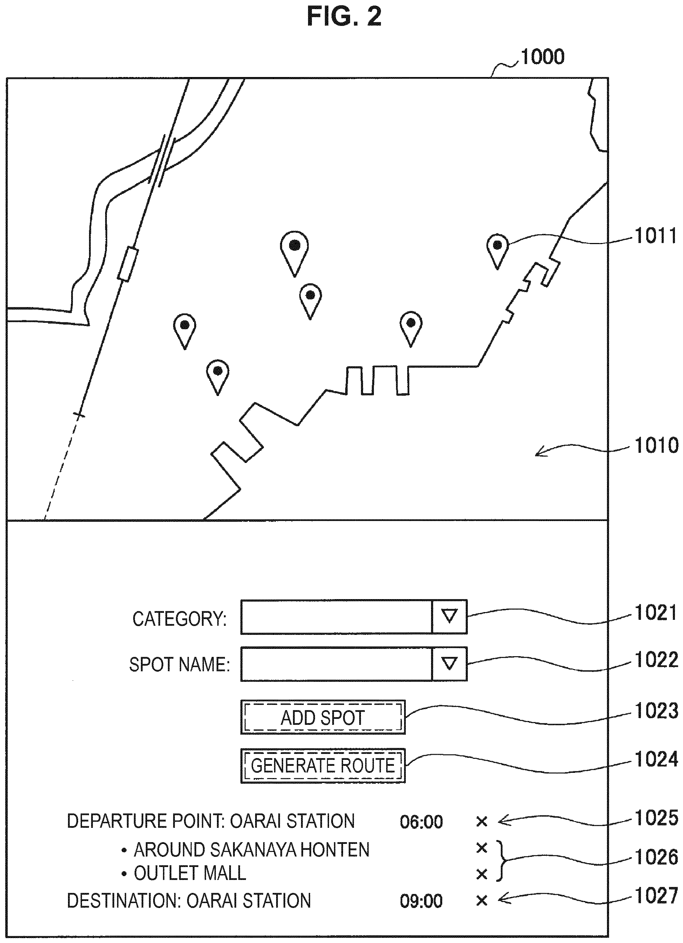

FIG. 2 illustrates a first example of a user interface provided by the planning app in the first embodiment of the present disclosure. Referring to FIG. 2, a screen 1000 is displaying a map 1010, a spot icon 1011, a category input box 1021, a spot name input box 1022, an add spot button 1023, a generate route button 1024, a departure point display 1025, a via-spot display 1026, and a destination display 1027.

The screen 1000 is displayed on, for example, a display provided in the terminal device implementing the client 100, or a display externally connected to the terminal device (which may not be limited to a flat surface display, and may be a light guide mechanism or the like mounted on a curved surface display or an eyewear. The same applies to the following examples). Note that operation input of the user on the screen 1000 is received by, for example, an input device, such as a touch sensor (which may constitute a touch panel), a mouse, a keyboard, that is provided in the terminal device or a similar input device externally connected to the terminal device, or a device implementing a Natural User Interface (NUI) such as voice or gesture, and since known approaches may be used for these input methods, the detailed description thereof is omitted hereinafter.

The map 1010 displays a subject area for planning. The subject area for planning may be selected from predetermined options, or may be freely configurable by operation of scrolling or zooming in/out the map 1010. Further, after the subject area for planning is determined, the map 1010 may be capable of zooming in/out or scrolling within the area.

The spot icon 1011 is an icon configured to display a position of a spot on the map 1010. The spot icon 1011 may display the position of the spot as the depicted example and pop up the spot name or the other additional information when selected by the user operation. Alternatively, the spot icon 1011 may display information such as a spot name in accompaniment regardless of selection of the user operation.

The category input box 1021 and the spot name input box 1022 are input units for specifying a spot. For example, the user may text input a spot name that the user already knows to the spot name input box 1022. Further, upon selecting the spot icon 1011 displayed on the map 1010 by a user operation, a corresponding spot name may be automatically inputted to the spot name input box 1022.

The category input box 1021 is used for facilitating input using the spot name input box 1022. For example, as the depicted example, it may be possible to use a drop-down list to select a category of the spot (for example, a transportation hub, a sightseeing spot, a shopping district, a hotel, or the like) in the category input box 1021. Alternatively, it may be possible to specify a category by text input in the category input box 1021.

When any one of the categories is specified in the category input box 1021, a drop-down list to display a spot name corresponding to the specified category may be provided in the spot name input box 1022 (in this case, a drop-down list to display all spot name may be provided as long as the category is not specified). Further, when any one of the categories is specified in the category input box 1021, the spot icon 1011 corresponding to the specified category may be highlighted (for example, the other spot icon may be dimmed or may not be displayed) in the map 1010.

The add spot button 1023 is a button for adding the spot specified by the spot name input box 1022 as a departure point, a destination, or a via-point of the route. For example, a spot added by pressing the add spot button 1023 for the first time may be recognized as the departure point, a spot added thereafter by pressing the add spot button 1023 in the last before pressing the generate route button 1024 may be recognized as the destination, and the other spot may be recognized as the via-point. Alternatively, the add spot button 1023 may be equipped for each of the departure point, the destination, and the via-point, or configuration of each of the departure point, the destination, and the via-point may be switchable with radio buttons or the like.

The generate route button 1024 is a button for starting automatic generation of the route in which the spots added using the add spot button 1023 are taken as the departure point, the destination, and the via-point. When the user presses the generate route button 1024, a request for route generation is transmitted from the client 100 to the server 200, and, on the basis of information received as a response from the server 200, a screen is displayed to display the route as described below.

A departure point display 1025, a via-point display 1026, and a destination display 1027 display the spot names of the departure point, the via-point, and the destination of the route added by the add spot button 1023 described above. In the depicted example, the added spot may be deleted by selecting "x" (x-mark) associated with each display. Further, in the depicted example, the departure point display 1025 and the destination display 1027 are accompanied by displays of time. These times respectively represent an estimated departure time (i.e., a starting time of the route) at the departure point and an estimated arrival time (i.e., an ending time of the route) at the destination. By otherwise providing an input means (not shown) for setting these times, the user is able to specify a required time of the entire route and a time slot for the plan to be executed as the conditions.

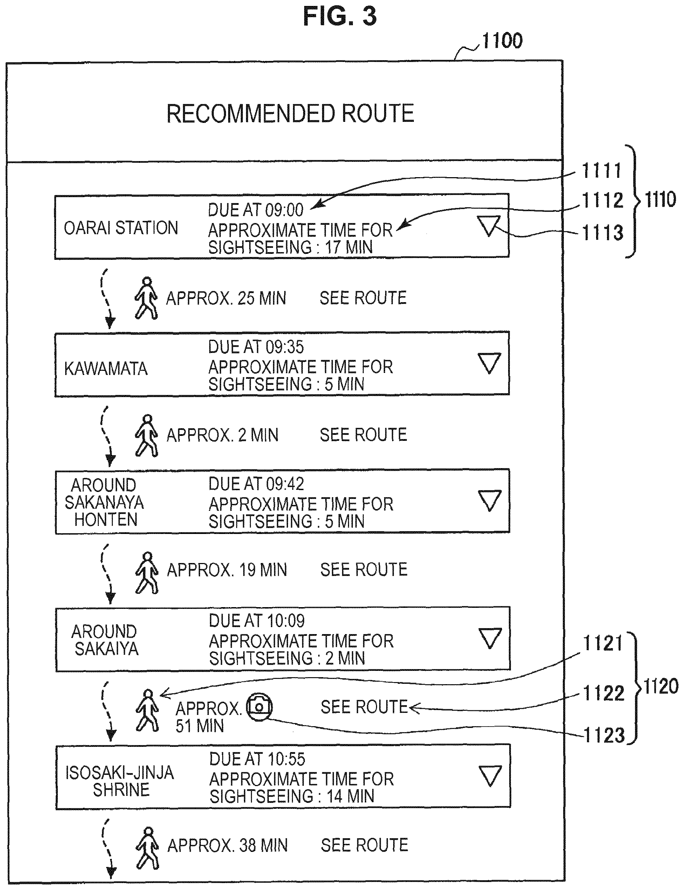

FIG. 3 illustrates a second example of a user interface provided by the planning app in the first embodiment of the present disclosure. Referring to FIG. 3, a screen 1100 is displaying a spot information 1110 and a travel route information 1120. The spot information 1110 may include an estimated arrival time 1111, an approximate sojourn time 1112, and an expansion icon 1113. The travel route information 1120 may include an approximate required time 1121, a route reference link 1122, and an image reference icon 1123. The screen 1100 is also displayed on a display provided in the terminal device implementing the client 100 or a display externally connected to the terminal device, for example.

The spot displayed by the spot information 1110 may include, in addition to the spots of the departure point, the via-point, and the destination selected in the screen 1000 described above, a spot added automatically depending on the required time of the entire route, or the like (in the depicted example, the spot selected as the via-point is handled as the must-see spot in the processing of the route determining unit described above). The travel route information 1120 displays information on a route for travelling between spots displayed by the spot information 1110. Note that the details of a method for determining the route will be described later.

Here, the approximate sojourn time 1112 included in the spot information 1110 is displayed on the basis of an average value of sojourn time of the user at the spot which is calculated on the basis of the other users' logs. Further, the approximate required time 1121 included in the travel route information 1120 is displayed on the basis of an average value of the required time for the user who used a similar transport means which is calculated on the basis of the other users' logs. By integrating these times from the estimated departure rime specified in the screen 1000, the estimated arrival time 1111 included in the spot information 1110 may be calculated.

The expansion icon 1113 is an icon for displaying additional information such as, for example, a related image and/or explanation or the other user's post for each spot. The user can refer more detailed information on the spot that the user has interest or the user is not familiar with by selecting the expansion icon 1113.

The route map reference link 1122 is a link for displaying a route map for each travel route. The user may display the route map by selecting the route map reference link 1122 for the travelling route that the user is not familiar with.

The image reference icon 1123 is displayed for each travel route when there is a photograph taken on the route by the other user. In a town having a sightseeing spot, for example, there may be places of interest on the travelling route and photographs may be taken while it does not need to sojourn. The user may refer to such an image indicating a place of interest other than the spot by selecting the image reference icon 1123.

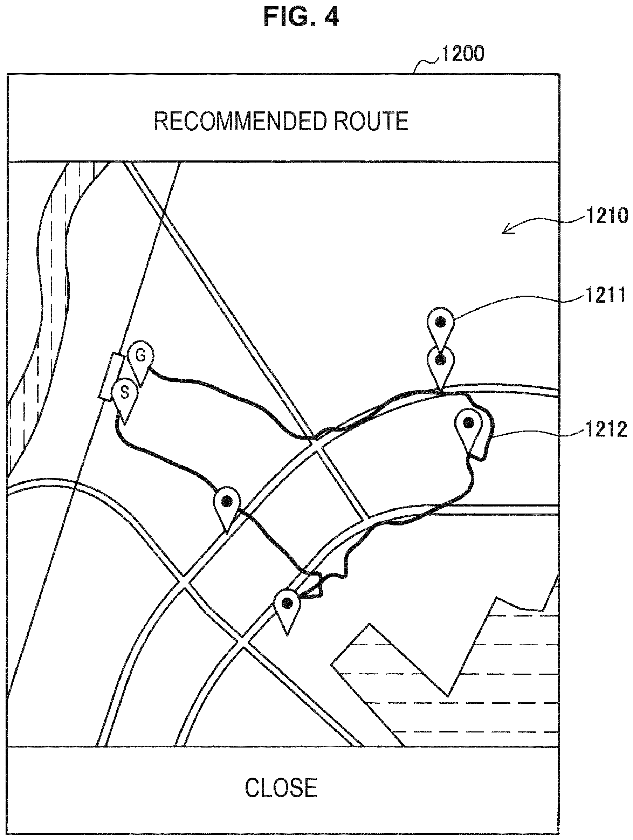

FIG. 4 illustrates a third example of a user interface provided by the planning app in the first embodiment of the present disclosure. Referring to FIG. 4, a screen 1200 is displaying a map 1210, a spot icon 1211, and a route 1212. The screen 1200 is also displayed on a display provided in the terminal device implementing the client 100 or a display externally connected to the terminal device, for example.

In the depicted screen 1200, a route that is automatically generated on the basis of the condition inputted in the screen 1000 described above is displayed on the map 1210. The spot icon 1211 may be a similar icon to the spot icon 1011 displayed on the map 1010 in the screen 1000, however, may be displayed with limiting to spots that are included in the generated route. An icon of the other spot may not be displayed or may be displayed with more discreet than the icon of the spot icon 1211. The route 1212 displays a route for travelling between the spots displayed by the spot icon 1211.

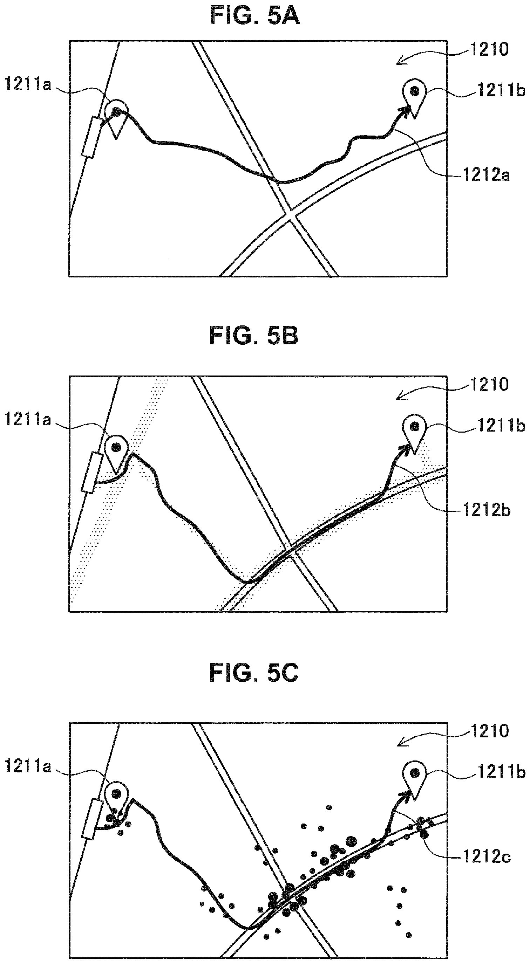

FIG. 5A-5C illustrate extraction of a route in the first embodiment of the present disclosure.

In FIG. 5A, for comparative explanation, a route 1212a which is selected independent of the statistical index associated with the activity log is shown. When automatically selecting a route from one place to another place, generally, the shortest route is selected as shown in FIG. 5A. However, when the user is engaging in activities for the purpose of sightseeing, for example, a route that is more fun to walk in which, for example, streets having a good taste or lined up with souvenir shops or restaurants is often expected rather than a shorter route. In such cases, it is not necessarily appropriate to select the shortest route as shown in FIG. 5A.

In FIG. 5B, a route 1212b that is selected on the basis of a heat map indicating a travel route frequently used by the other users is shown. The heat map in the depicted example indicates the number of the users passed through each of the routes included in the route group indicated by the activity log. More specifically, for example, this heat map is generated by superimposing a time series of data of position information of the plurality of users as a histogram. Due to printing limitations, the heat map is shown in a uniform density, however, in practice, a heat map may be generated in which the density changes gradually or continuously. A part displayed in higher density in the heat map indicates a region passed through by more users.

For example, when the user is engaging in activities for the purpose of sightseeing, by generating a heat map as shown in FIG. 5B on the basis of the activity log of the other user who engaged in activities in the past for the purpose of sightseeing as well and selecting the route 1212b so as to pass through parts with higher density, a route that the user is more fun to walk, in other words, a more appropriate route in accordance with the user's purpose is more likely to be selected.

In FIG. 5C, a route 1212c that is selected on the basis of a dot map indicating places where photographs are taken by the other users is shown. The dot map in the depicted example indicates the quantity of activities (photographing) of users on the routes included in the route group indicated by the activity log. More specifically, for example, this dot map is generated by plotting a place where each user took a photograph on the map. If many users took photographs in the same place, a dot may be represented as a large dot. A region where dots are arranged in higher density or a region where larger dots are arranged indicates a region where more activities (photographing) of users are occurred.

For example, when the user is engaging in activities for the purpose of sightseeing, by generating a dot map as shown in FIG. 5C on the basis of the activity log of the other user who engaged in activities in the past for the purpose of sightseeing as well and selecting the route 1212c so as to pass through regions with dots are arranged in higher density or larger dots are arranged, a route with more photographing object, in other words, a more appropriate route in accordance with the user's purpose is more likely to be selected. Note that, as described above, the activities of users are not limited to photographing and may be a social media post or the like.

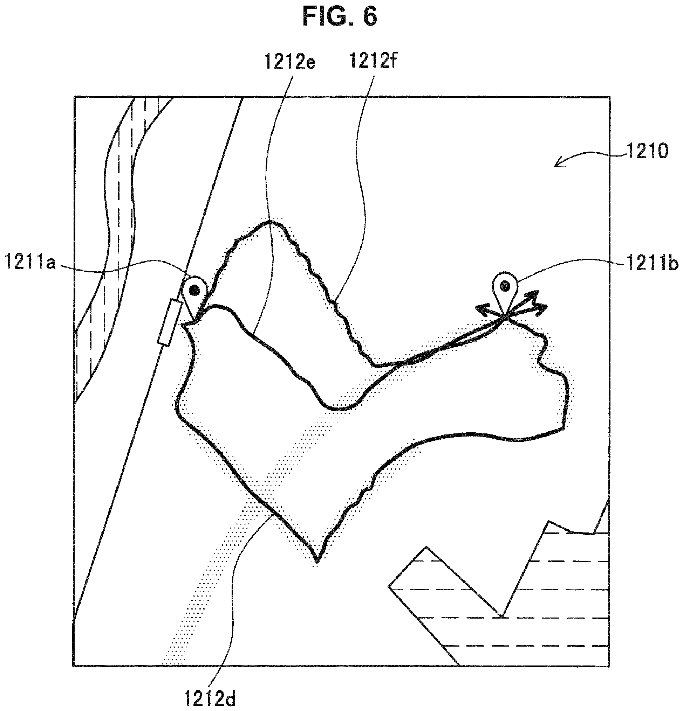

FIG. 6 illustrates evaluation of a route in the first embodiment of the present disclosure. In FIG. 6, route candidates 1212d-1212f for travelling from a spot indicated by a spot icon 1211a to a spot indicated by a spot icon 1211b in a region shown by a map 1210.

As described above with reference to FIG. 5A-5C, in this embodiment, a route other than a mere shortest route may be selected by referring to a statistical map based on the activities of the other users, for example. This enables suggestion of a route that is more fun to walk or a route with more photographing objects to the user engaged in activities for the purpose of sightseeing, for example.

However, even if it is for the purpose of sightseeing, since time for travelling is limited, evaluation of the route by distance is not negligible. As such, in this embodiment, a route to be suggested to the user is determined on the basis of a score obtained by weighting and adding a score based on the distance of the route and a score based on the statistical index of the activity log as described below.

For example, in this embodiment, a score S for evaluating the route may be calculated with the following equation:

$$S = a * S_{dist} + (1 - a) S_{stat} \ (0 < a < 1),$$

where, $S_{dist}$ is a score based on the distance of the route, and the shorter the distance of the route is, the higher the score given. In contrast, $S_{stat}$ is a score based on the statistical index of the activity log, the more the other user passed through the route or the more the other user's activity occurred on the route, the higher the score may be given, for example. In the equation described above, by adding these two types of scores ($S_{dist}$ and $S_{stat}$) with a predetermined ratio, the score S for evaluating the route is calculated.

For example, in the case of the example shown in FIG. 6, if Score = 0.3 for the route candidate 1212d, Score = 0.5 for the route candidate 1212e, and Score = 0.8 for the route candidate 1212f, the route candidate 1212f which has the highest score may be suggested as the optimal route to the user.

Here, as described above, the route determining unit 206 of the server 200 may change the index for extracting the route depending on the attribute or the purpose of the user who uses the suggested route. For example, in the case described above, the route determining unit 206 may change the statistical index of the activity log for calculating the score $S_{stat}$ depending on the attribute or the purpose of the user. More specifically, if attribute information of the user or the like indicates that the user to be suggested prefers photographing, the route determining unit 206 may calculate the score $S_{stat}$ on the basis of the frequency of occurrence of photographing by the other users. Further, if the attribute information of the user or the like indicates that the user prefers social media posting, the route determining unit 206 may calculate the score $S_{stat}$ on the basis of the frequency of occurrence of social media posting by the other users.

Further, the route determining unit 206 may change weights of the score based on the distance of the route and the score based on the statistical index of the activity log depending on the attribute or the purpose of the user. For example, in the equation for calculating the score S described above, by adjusting a value of ratio a, evaluation of the optimal route for the user wishing to visit more spots efficiently (value of a is large) and evaluation of the optimal route for the user wishing to visit fewer spots thoroughly (value of a is small) may be selectively used.

Further, the score of the route described above may be adjustable by external operation. For example, when an event is held for a limited time at a spot, the score of the route passing through in the vicinity of the spot may be upwardly revised. Further, when it is preferred to avoid the users to concentrate in a particular route in a popular tourist destination, the score of each route may be adjusted so as to disperse the users.

(2. Second Embodiment)

Next, a second embodiment of the present disclosure is described. In this embodiment, the user interface provided to the user is different from the user interface of the first embodiment described above, however, the other configuration is similar to the first embodiment, and thus repeated detailed explanation is omitted.

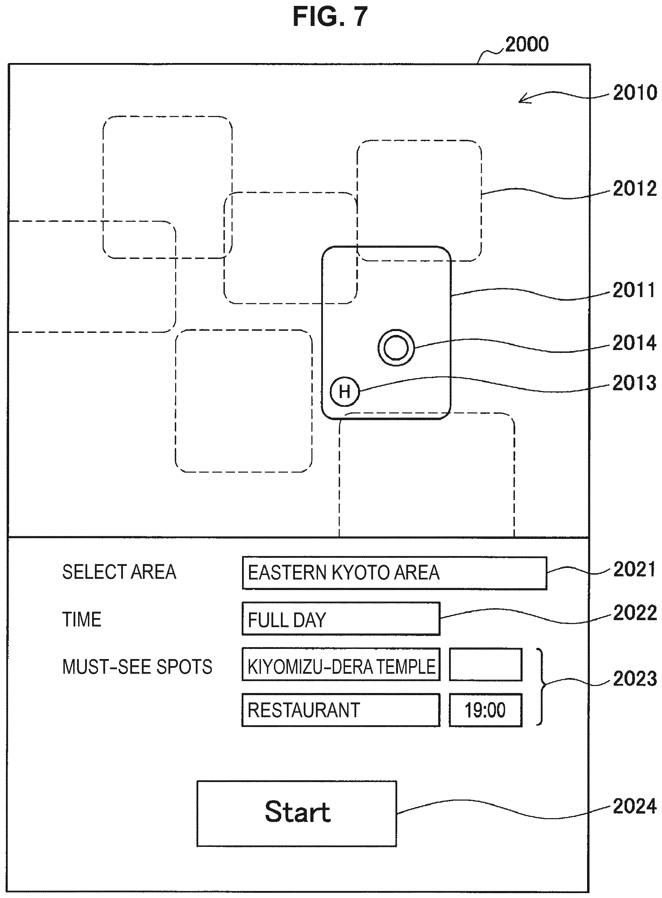

FIG. 7 illustrates an example of a user interface provided by the planning app in a second embodiment of the present disclosure. Referring to FIG. 7, a screen 2000 is displaying a map 2010, a selected area 2011, an unselected area 2012, spot icons 2013, 2014, an area name input box 2021, a time input box 2022, a spot name input box 2023, and a start button 2024. The screen 2000, similar to the screen 1000 and the like described above, is also displayed on a display provided in the terminal device implementing the client 100 or a display externally connected to the terminal device, for example.

The map 2010 displays a plurality of subject areas for planning. In this example, a subject area for planning is selected from predetermined options. An area that is currently selected is displayed as the selected area 2011, and the other area that is not selected is displayed as the unselected area 2012, respectively. The spot icons 2013, 2014 are displaying spots selected as the departure point, the destination, or the via-point of the route in the selected area 2011.

The area name input box 2021 displays a name corresponding to an area displayed as the selected area 2011. Alternatively, the name inputted in the area name input box 2021 may be reflected to the display of the selected area 2011. The required time of the route is inputted in the time input box 2022. In the depicted example, "FULL DAY" is inputted in the time input box 2022. Additionally, the time may be inputted roughly, such as "morning" or "afternoon". Further, as the example described above with reference to FIG. 2, it may be able to specify the starting time and the ending time.

In the spot name input box 2023, a name of a spot is inputted that is to be the departure point, the destination, or the via-point of the route. In the depicted example, in addition to the name of the spot, it is possible to specify an arrival time. For example, when there is a reservation for lunch or dinner, it may be possible to specify the arrival time for the via-point. Note that, in the depicted example, since the departure point and the destination (which is the hotel staying) are already fixed, the spot name input box 2023 is displayed to input the via-point (must-visit spots). The start button 2024 is a button for starting the generation of the route via spots specified by the spot name input box 2023.

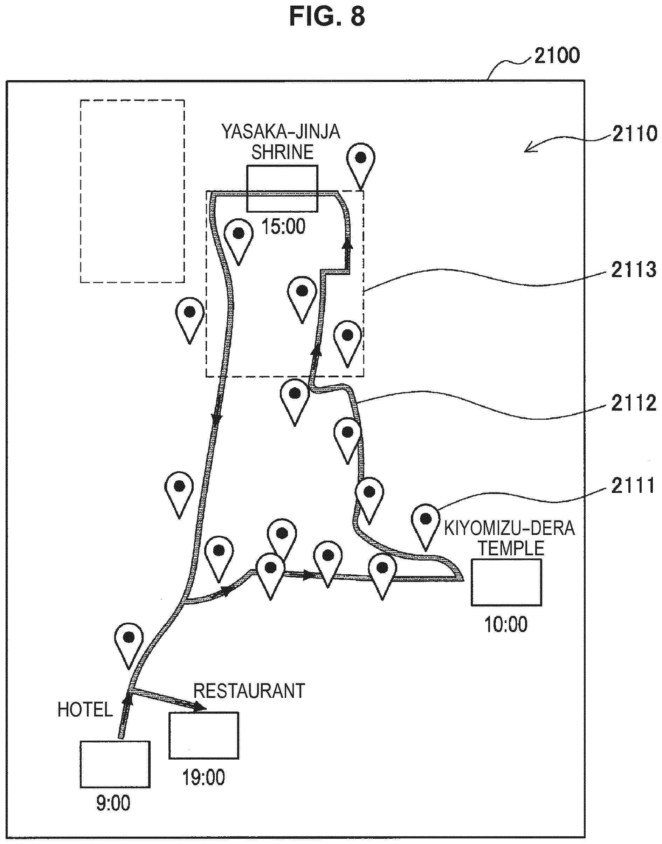

FIG. 8 illustrates an example of a user interface displaying the route generated in the second embodiment of the present disclosure. A screen 2100 shown in FIG. 8 may be displayed as a result of the automatic generation of the route by the planning app, or may be displayed as a default display of the route that is provided with navigation by the navigation app, for example. The screen 2100 is also displayed on a display provided in the terminal device implementing the client 100 or a display externally connected to the terminal device, for example.

The screen 2100 is displaying a map 2110, a spot icon 2111, a route 2112, and a zone 2113. The map 2110 is a map of the region in which the route is generated. The spot icon 2111 displays a spot in the vicinity of the route 2112. Displaying spots in the vicinity as such enables stopping at spots other than predetermined spots. In the automatic generation of the route, a spot other than must-see spots that are specified by the user may be automatically selected as the first embodiment described above, or options may be displayed for spots other than the must-see spots to be able to stop optionally as the depicted example.

The zone 2113 is displayed for representing an atmosphere of the route. For example, streets having a good taste or lined up with souvenir shops or restaurants may be displayed as "a stroll zone". Such display allows the user to know the atmosphere such as streets on the route.

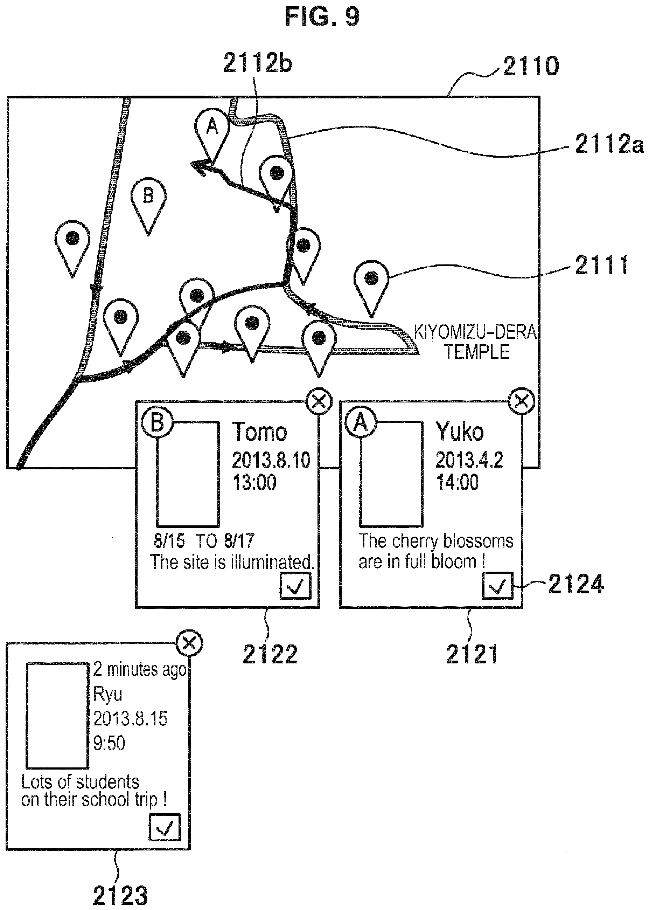

FIG. 9 illustrates an example of information additionally displayed in the user interface shown in FIG. 8. In FIG. 9, a map 2110 is displaying information 2121-2123 extracted from the activity log of the other users who have visited the spot in the similar area. Information may be information from a user who visited the spot in another season as information 2121, or may be information from a user who visited the spot a short time ago as information 2122, for example. Further, the information may be information from a user who visited the spot on the same day in real time as information 2123. Further, the route 2112b of the other user may be displayed with the route 2112a which is being navigated.

On the basis of such information, the user may change the route in real time. For example, the user who referred to the information 2123 indicating that the next spot to be visited is clouded may postpone visiting the spot and head for the other spot. More specifically, for example, the user checks the checkbox 2124 (meaning that the information presents interest) associated with the information 2123. The navigation app 120 transmits the operation input to the server 200. In the server 200, the action acquiring unit 210 receives the operation input, and the route determining unit 206 re-executes the determination of the route to change the order of the via-points. Similarly, when the user checks the checkbox 2124 associated with the information 2122 indicating that an event is held for a limited time in the vicinity of the route to come, the route determining unit 206 may re-execute the determination of the route to pass through the place of the event.

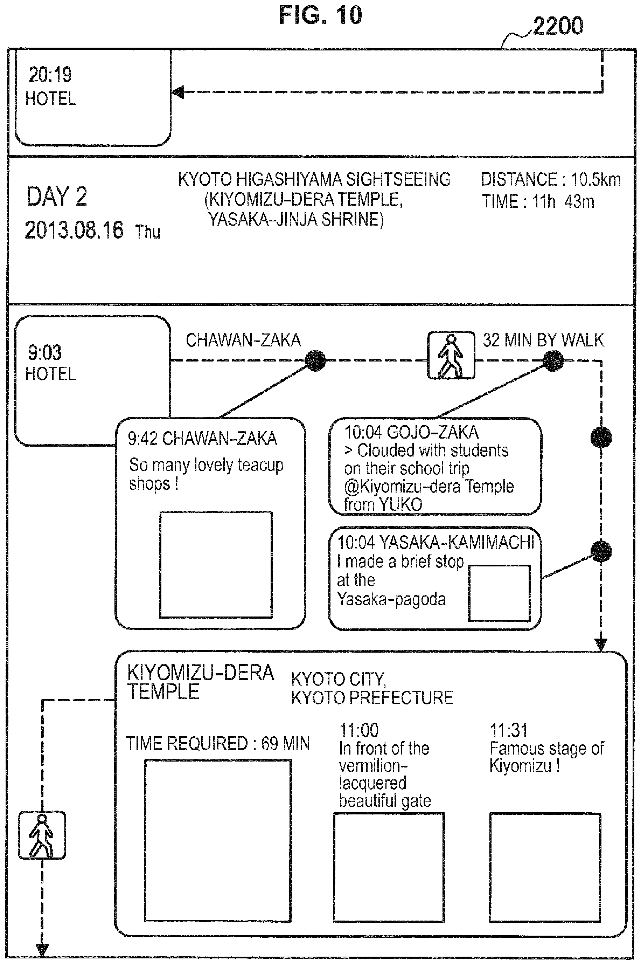

FIG. 10 illustrates an example of a user interface presented by the log display function in the second embodiment of the present disclosure. Referring to FIG. 10, a screen 2200 includes the activity log of the user displayed by the log display function 150 of the navigation app 120. The screen 2200 is also displayed on a display provided in the terminal device implementing the client 100 or a display externally connected to the terminal device, for example.

The screen 2200 displays spots visited on the day's route, photographs taken at each spot, a comment inputted in a social media post, or the like, altogether. This allows the user to easily look back the two days' journey. Further, information from the other user referred during the journey may be displayed on the screen 2200. Automatic generation of the screen displaying such a log allows the user to look back on the day's activities, for example. Further, the generated log may be shared with the other user.

(3. Another Embodiment)

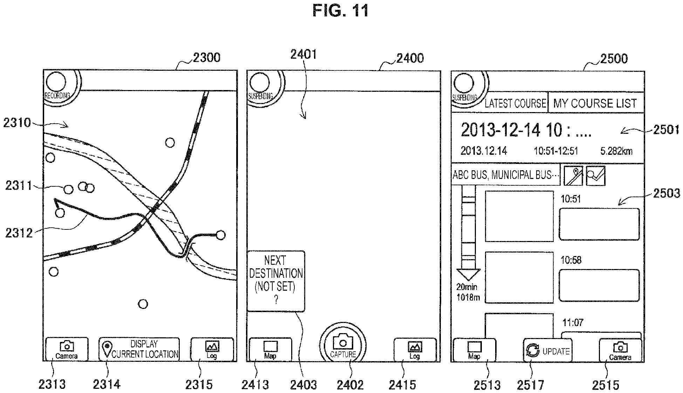

FIG. 11 illustrates an example of a user interface according to another embodiment of the present disclosure. Referring to FIG. 11, in this embodiment, screens 2300-2500 are displayed. The screens 2300-2500, similar to the screens 1000, 2000, or the like described above, are also displayed on a display provided in the terminal device implementing the client 100 or a display externally connected to the terminal device, for example.

The screen 2300 is displaying a map 2310, a spot icon 2311, a route 2312, a camera button 2313, a current location display button 2314, and a log display button 2315. The screen 2300 displays, for example, a map for navigation provided in accordance with the route generated automatically. The spot icon 2311 and the route 2312 is similar to the example described above with reference to FIG. 8, for example. The camera button 2313 and the log display button 2315 are buttons for transitioning to the other screens 2400, 2500. The current location display button 2314 is a button for restoring display range to a region including the current location when the display range of the map 2310 changed by scrolling or zooming in/out.

The screen 2400 is displaying a live view image 2401, a photographing button 2402, a next destination display 2403, a map display button 2413, and a log display button 2415. The screen 2400 is displayed when photographing while using the navigation, for example. The photograph taken in the screen 2400 is incorporated into the user's log in the service according to this embodiment. The next destination display 2403 enables referring to navigation information even while photographing. The map display button 2413 and the log display button 2415 are buttons for transitioning to the other screens 2300, 2500.

The screen 2500 is displaying a title 2501, a log 2503, a map display button 2513, a camera button 2515, and an update button 2517. The screen 2500 is provided with a similar log display screen to the example described above with reference to FIG. 10. The map display button 2513 and the camera button 2515 are buttons for transitioning to the other screens 2300, 2400. The update button 2517 is a button for updating the log in real time. Upon pressing the update button 2517, the navigation app 120 requests the server 200 to update the log, and the server 200 provides the log updated by the log editing unit 230.

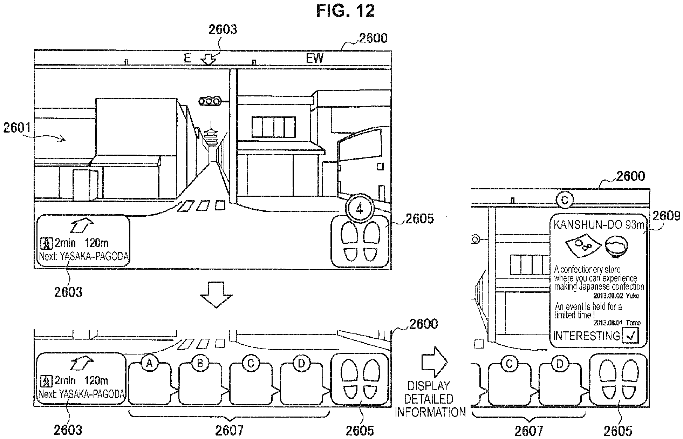

FIG. 12 illustrates an example of a user interface according to still another embodiment of the present disclosure. A screen 2600 shown in FIG. 12 may be displayed by superimposing on a real-space image by using a display provided in a wearable device implementing the client 100, for example.

The screen 2600 displays a real-space image 2601 which is displayed transparently, a navigation 2603, and an information icon 2605. The navigation 2603 includes information of, for example, the next spot on the route and the estimated required time to the next spot. Upon selecting the information icon 2605, icons 2607 is expanded. By selecting each of the icons 2607, an information window 2609 is displayed. The information icon 2605, the icons 2607, and the information window 2609 may display, for example, spot information on the route or in the vicinity of the route (place, required time, opening time, entry fees, etc.), or a photograph or a post of the other user related to the route. The displayed information may include, for example, information obtained by using external POI service or information extracted from the activity log of the other user who has visited the spot in the similar area, as the example described above with reference to FIG. 9. Similar to the example of FIG. 9, when the user made some action on displayed information (for example, meaning that the information presents interest), on the basis of the action, the route determining unit 206 of the server 200 may re-execute the determination of the route.

According to some embodiments of the present disclosure described above, for example, even when the user does not necessarily wish to arrive at the destination through the shortest path, and more specifically, even when the user is travelling for sightseeing or the like, it will be possible to generate more effective navigation information for supporting the user's activities. Note that the navigation according to the embodiments of the present disclosure is effective when the user is travelling for sightseeing or the like, but not necessarily so limited. For example, if a route that is passed through by more other user in the site is extracted as an optimal route, avoiding delay due to transportation condition specific to the site which does not reflect on traffic restriction information or traffic jam information may allow the user to arrive at the destination in the shortest required time as a consequence. Further, as used herein, the term "sightseeing" refers to one example of an activity of sojourning by the user in a certain area with some purpose and may be replaced with "inspection", "survey", "observation", or the like.

(4. Hardware Configuration)

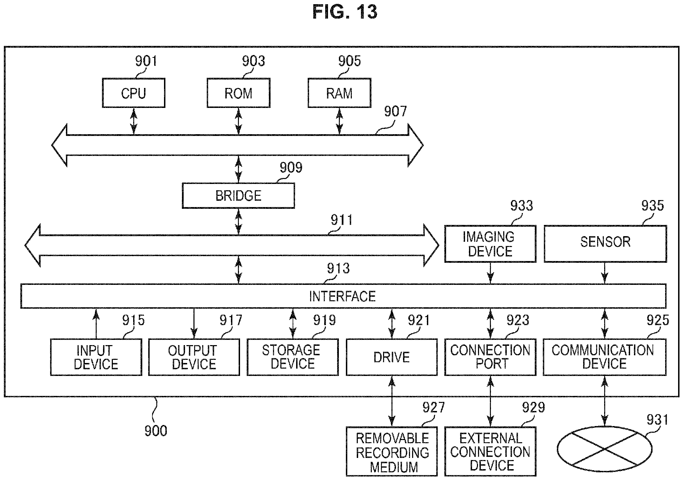

Next, with reference to FIG. 13, a hardware configuration of an information processing apparatus according to an embodiment of the present disclosure will be described. FIG. 13 is a block diagram showing a hardware configuration of an information processing apparatus according to an embodiment of the present disclosure. An information processing apparatus 900 which is shown may achieve the server or the client in the above described embodiments, for example.

The information processing apparatus 900 includes a central processing unit (CPU) 901, read only memory (ROM) 903, and random access memory (RAM) 905. Further, the information processing apparatus 900 may also include a host bus 907, a bridge 909, an external bus 911, an interface 913, an input device 915, an output device 917, a storage device 919, a drive 921, a connection port 923, and a communication device 925. Furthermore, the information processing apparatus 900 may include an imaging device 933 and a sensor 935 as necessary. The information processing apparatus 900 may also include, instead of or along with the CPU 901, a processing circuit such as a digital signal processor (DSP), an application specific integrated circuit (ASIC), or a field-programmable gate array (FPGA).

The CPU 901 functions as an arithmetic processing unit and a control unit and controls an entire operation or a part of the operation of the information processing apparatus 900 according to various programs recorded in the ROM 903, the RAM 905, the storage device 919, or a removable recording medium 927. The ROM 903 stores programs and arithmetic parameters used by the CPU 901. The RAM 905 primarily stores programs used in execution of the CPU 901 and parameters and the like varying as appropriate during the execution. The CPU 901, the ROM 903, and the RAM 905 are connected to each other via the host bus 907 configured from an internal bus such as a CPU bus or the like. In addition, the host bus 907 is connected to the external bus 911 such as a peripheral component interconnect/interface (PCI) bus via the bridge 909.

The input device 915 is a device operated by a user, such as a mouse, a keyboard, a touch panel, buttons, a switch, and a lever. Also, the input device 915 may be a remote control device using, for example, infrared light or other radio waves, or may be an external connection device 929 such as a cell phone compatible with the operation of the information processing apparatus 900. The input device 915 includes an input control circuit that generates an input signal on the basis of information input by the user and outputs the input signal to the CPU 901. The user inputs various kinds of data to the information processing apparatus 900 and instructs the information processing apparatus 900 to perform a processing operation by operating the input device 915.

The output device 917 includes a device capable of notifying a user of the acquired information visually, audibly or with a tactile sense. Examples of the output device 917 include display devices such as a liquid crystal display (LCD) or an organic electro-luminescence (EL) display, audio output devices such as a speaker and a headphone, and a vibrator. The output device 917 outputs a result obtained through the process of the information processing device 900 as a picture such as text or an image, as an audio such as a voice or an acoustic sound, or as vibration.

The storage device 919 is a device for storing data configured as an example of a storage unit of the information processing apparatus 900. The storage device 919 is configured from, for example, a magnetic storage device such as a hard disk drive (HDD), a semiconductor storage device, an optical storage device, or a magneto-optical storage device. This storage device 919 stores programs to be executed by the CPU 901, various data, and various data obtained from the outside.

The drive 921 is a reader/writer for the removable recording medium 927 such as a magnetic disk, an optical disc, a magneto-optical disk, or a semiconductor memory, and is built in or externally attached to the information processing apparatus 900. The drive 921 reads out information recorded on the attached removable recording medium 927, and outputs the information to the RAM 905. Further, the drive 921 writes the record on the attached removable recording medium 927.

The connection port 923 is a port for allowing devices to connect to the information processing apparatus 900. Examples of the connection port 923 include a universal serial bus (USB) port, an IEEE1394 port, and a small computer system interface (SCSI) port. Other examples of the connection port 923 may include an RS-232C port, an optical audio terminal, and a high-definition multimedia interface (HDMI) (a registered trademark) port. The connection of the external connection device 929 to the connection port 923 may enable the various data exchange between the information processing apparatus 900 and the external connection device 929.

The communication device 925 is a communication interface configured from, for example, a communication device for establishing a connection to a communication network 931. The communication device 925 is, for example, a local area network (LAN), Bluetooth (registered trademark), Wi-Fi, a communication card for wireless USB (WUSB), or the like. Alternatively, the communication device 925 may be a router for optical communication, a router for asymmetric digital subscriber line (ADSL), a modem for various communications, or the like. The communication device 925 can transmit and receive signals and the like using a certain protocol such as TCP/IP on the Internet and with other communication devices, for example. The communication network 931 connected to the communication device 925 is configured from a network which is connected via wire or wirelessly and is, for example, the Internet, a home-use LAN, infrared communication, radio wave communication, and satellite communication.

The imaging device 933 is a device which images a real space by use of various members including an image sensor such as a complementary metal oxide semiconductor (CMOS) or a charge coupled device (CCD) and a lens for controlling image formation of a subject on the image sensor, and generates a pickup image. The imaging device 933 may image a still image or a moving image.

Examples of the sensor 935 include various sensors such as an acceleration sensor, a angular velocity sensor, a geomagnetic sensor, an illuminance sensor, a temperature sensor, a barometric sensor or an audio sensor (a microphone). The sensor 935 acquires, for example, information regarding a posture state of the information processing device 900, such as a posture of the casing of the information processing device 900 or information regarding a surrounding environment of the information processing device 900, such as brightness or noise of the surroundings of the information processing device 900. Also, the sensor 935 may include a Global Positioning System (GPS) receiver that receives GPS signals and measures the latitude, longitude, and altitude of the device.

Heretofore, an example of the hardware configuration of the information processing apparatus 900 has been shown. Each of the structural elements described above may be configured using a general-purpose material, or may be configured from hardware dedicated to the function of each structural element. The configuration may be changed as appropriate according to the technical level at the time of carrying out embodiments.

(5. Supplement)

The embodiments of the present disclosure may include the information processing apparatus, the system, the information processing method executed in the information processing apparatus or the system, the program for causing the information processing apparatus to function, and the non-transitory tangible media having the program recorded thereon, which have been described above, for example.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.

(1) An information processing apparatus including:

an activity log acquiring unit configured to acquire an activity log indicating a route group that includes routes which a plurality of users have passed through;

a route extraction unit configured to extract an optimal route from the route group on the basis of a statistical index associated with the activity log; and

an information presenting unit configured to provide information indicating the optimal route.

(2) The information processing apparatus according to (1), wherein

the statistical index includes the number of the users who have passed through each of the routes included in the route group; and

the route extraction unit extracts a route which has been passed through by more users as the optimal route.

(3) The information processing apparatus according to (1) or (2), wherein

the statistical index includes a quantity of activities of the plurality of users occurred on a route included in the route group; and

the route extraction unit extracts a route on which more quantity of activities has occurred as the optimal route.

(4) The information processing apparatus according to (3), wherein the activity includes photographing or social media posting.

(5) The information processing apparatus according to any one of (1) to (4), wherein the route extraction unit extracts the optimal route by evaluating candidates for the optimal route on the basis of a score obtained by weighting and adding a score based on the statistical index and a score based on a distance of a route of each of the candidates.

(6) The information processing apparatus according to any one of (1) to (5), wherein the route extraction unit changes an index for extracting the optimal route depending on an attribute or a purpose of a user who uses the optimal route.

(7) The information processing apparatus according to any one of (1) to (6), wherein the route extraction unit extracts any one of the routes included in the route group as the optimal route.

(8) The information processing apparatus according to any one of (1) to (6), wherein the route extraction unit extracts the optimal route by connecting at least parts of the routes included in the route group together.

(9) The information processing apparatus according to any one of (1) to (8), wherein the information presenting unit further provides information indicating activities of the plurality of users occurred on the routes included in the route group.

(10) The information processing apparatus according to (9), further including
an action acquiring unit configured to acquire an action of a user provided with the information, with respect to the information indicating the activity;
wherein the route extraction unit re-extracts the optimal route on the basis of the action.

(11) The information processing apparatus according to (10), wherein the action indicates a change or an addition of a destination or a via-point of the route.

(12) An information processing method including:

acquiring an activity log indicating a route group that includes routes which a plurality of users have passed through;
extracting, by a processor, an optimal route from the route group on the basis of a statistical index associated with the activity log; and
providing information indicating the optimal route.

(13) A program causing a computer to achieve:

a function of acquiring an activity log indicating a route group that includes routes which a plurality of users have passed through;
a function of extracting an optimal route from the route group on the basis of a statistical index associated with the activity log; and
a function of providing information indicating the optimal route.

Reference Signs List

| | |
|---|---|
| 10 | system |
| 100 | client |
| 110 | planning app |
| 120 | navigation app |
| 130 | context sensor |
| 140 | map display function |
| 150 | log display function |
| 200 | server |
| 202 | activity log acquiring unit |
| 204 | journey splitting unit |
| 206 | route determining unit |
| 208 | information presenting unit |
| 210 | action acquiring unit |
| 220 | DB |
| 230 | log editing unit |

**Claims**

1. An information processing apparatus comprising:

   an activity log acquiring unit configured to acquire an activity log indicating a route group that includes routes which a plurality of users have passed through;
   a route extraction unit configured to extract an optimal route from the route group on the basis of a statistical index associated with the activity log; and
   an information presenting unit configured to provide information indicating the optimal route.

2. The information processing apparatus according to claim 1, wherein
   the statistical index includes the number of the users who have passed through each of the routes included in the route group; and
   the route extraction unit extracts a route which has been passed through by more users as the optimal route.

3. The information processing apparatus according to claim 1, wherein
   the statistical index includes a quantity of activities of the plurality of users occurred on a route included in the route group; and
   the route extraction unit extracts a route on which more quantity of activities has occurred as the optimal route.

4. The information processing apparatus according to claim 3, wherein the activity includes photographing or social media posting.

5.  The information processing apparatus according to claim 1, wherein the route extraction unit extracts the optimal route by evaluating candidates for the optimal route on the basis of a score obtained by weighting and adding a score based on the statistical index and a score based on a distance of a route of each of the candidates.

6.  The information processing apparatus according to claim 1, wherein the route extraction unit changes an index for extracting the optimal route depending on an attribute or a purpose of a user who uses the optimal route.

7.  The information processing apparatus according to claim 1, wherein the route extraction unit extracts any one of the routes included in the route group as the optimal route.

8.  The information processing apparatus according to claim 1, wherein the route extraction unit extracts the optimal route by connecting at least parts of the routes included in the route group together.

9.  The information processing apparatus according to claim 1, wherein the information presenting unit further provides information indicating activities of the plurality of users occurred on the routes included in the route group.

10. The information processing apparatus according to claim 9, further comprising an action acquiring unit configured to acquire an action of a user provided with the information, with respect to the information indicating the activity; wherein the route extraction unit re-extracts the optimal route on the basis of the action.

11. The information processing apparatus according to claim 10, wherein the action indicates a change or an addition of a destination or a via-point of the route.

12. An information processing method comprising:

    acquiring an activity log indicating a route group that includes routes which a plurality of users have passed through;
    extracting, by a processor, an optimal route from the route group on the basis of a statistical index associated with the activity log; and
    providing information indicating the optimal route.

13. A program causing a computer to achieve:

    a function of acquiring an activity log indicating a route group that includes routes which a plurality of users have passed through;
a function of extracting an optimal route from the route group on the basis of a statistical index associated with the activity log; and
a function of providing information indicating the optimal route.

# FIG. 1

~200

**SERVER**

| ACTIVITY LOG ACQUIRING | ~202 | INFORMATION PRESENTING | ~208 |

~220

~230

| JOURNEY SPLITTING | ~204 | ACTION ACQUIRING | ~210 |

DB

LOG EDITING

| ROUTE DETERMINING | ~206 |

10

STARTING/ ENDING SPOT

PICTURE CONTEXT

ROUTE INFORMATION SPOT INFORMATION SOCIAL INFORMATION

LOG DATA

~100

**CLIENT**

**PLANNING APP** ~110

**NAVIGATION APP** ~120

CONTEXT SENSOR ~130

112~ | SPOT INFORMATION |

132~ | IMAGE |

~140

~150

114~ | CONDITION INPUT FUNCTION |

134~ | POSITION |

MAP DISPLAY FUNCTION

LOG DISPLAY FUNCTION

136~ | ACTIVITY |

# FIG. 2

CATEGORY: ▽ — 1021

SPOT NAME: ▽ — 1022

ADD SPOT — 1023

GENERATE ROUTE — 1024

DEPARTURE POINT: OARAI STATION    06:00    ✕ — 1025
- AROUND SAKANAYA HONTEN    ✕
- OUTLET MALL    ✕ — 1026
DESTINATION: OARAI STATION    09:00    ✕ — 1027

# FIG. 3

~1100

**RECOMMENDED ROUTE**

1111
1112 } 1110
1113

| OARAI STATION | DUE AT 09:00<br>APPROXIMATE TIME FOR<br>SIGHTSEEING : 17 MIN | ▽ |

🚶 APPROX. 25 MIN    SEE ROUTE

| KAWAMATA | DUE AT 09:35<br>APPROXIMATE TIME FOR<br>SIGHTSEEING : 5 MIN | ▽ |

🚶 APPROX. 2 MIN    SEE ROUTE

| AROUND<br>SAKANAYA<br>HONTEN | DUE AT 09:42<br>APPROXIMATE TIME FOR<br>SIGHTSEEING : 5 MIN | ▽ |

🚶 APPROX. 19 MIN    SEE ROUTE

| AROUND<br>SAKAIYA | DUE AT 10:09<br>APPROXIMATE TIME FOR<br>SIGHTSEEING : 2 MIN | ▽ |

1121
1122 } 1120
1123

🚶 APPROX.<br>51 MIN  📷    SEE ROUTE

| ISOSAKI-JINJA<br>SHRINE | DUE AT 10:55<br>APPROXIMATE TIME FOR<br>SIGHTSEEING : 14 MIN | ▽ |

🚶 APPROX. 38 MIN    SEE ROUTE

# FIG. 4

RECOMMENDED ROUTE

1200

1210

1211

1212

CLOSE

## FIG. 5A

## FIG. 5B

## FIG. 5C

# FIG. 6

# FIG. 7

SELECT AREA     EASTERN KYOTO AREA    2021

TIME     FULL DAY    2022

MUST-SEE SPOTS     KIYOMIZU-DERA TEMPLE

RESTAURANT    19:00

Start

# FIG. 8

# FIG. 9

2112b

2110

2112a

2111

Ⓐ

Ⓑ

KIYOMIZU-DERA
TEMPLE

Ⓑ Tomo
2013.8.10
13:00

8/15 TO 8/17
The site is illuminated.
☑

2122

Ⓐ Yuko
2013.4.2
14:00

The cherry blossoms
are in full bloom !
☑ 2124

2121

2 minutes ago
Ryu
2013.8.15
9:50

Lots of students
on their school trip !
☑

2123

# FIG. 10

~2200

20:19
HOTEL

DAY 2
2013.08.16 Thu

KYOTO HIGASHIYAMA SIGHTSEEING
(KIYOMIZU-DERA TEMPLE,
YASAKA-JINJA SHRINE)

DISTANCE : 10.5km
TIME : 11h 43m

9:03
HOTEL

CHAWAN-ZAKA

32 MIN BY WALK

9:42 CHAWAN-ZAKA

So many lovely teacup
shops !

10:04 GOJO-ZAKA
> Clouded with students
on their school trip
@Kiyomizu-dera Temple
from YUKO

10:04 YASAKA-KAMIMACHI
I made a brief stop
at the
Yasaka-pagoda

KIYOMIZU-DERA
TEMPLE

KYOTO CITY,
KYOTO PREFECTURE

TIME REQUIRED : 69 MIN

11:00
In front of the
vermilion-
lacquered
beautiful gate

11:31
Famous stage of
Kiyomizu !

## FIG. 11

2300

RECORDING

2310

2311

2312

| Camera | DISPLAY CURRENT LOCATION | Log |

2313    2314    2315

2401    2400

SUSPENDING

NEXT
DESTINATION
(NOT SET)
?

| Map | CAPTURE | Log |

2413    2403    2402    2415

2500

SUSPENDING    LATEST COURSE    MY COURSE LIST

**2013-12-14 10 : ....**    2501

2013.12.14        10:51-12:51        5.282km

ABC BUS, MUNICIPAL BUS···

10:51    2503

10:58

11:07

20min
1018m

| Map | UPDATE | Camera |

2513    2517    2515

## FIG. 12

2603

2600

E ⇩ EW

2601

👤 2min 120m
Next: YASAKA-PAGODA

4

2605

2603

⇩

2600

👤 2min 120m
Next: YASAKA-PAGODA

Ⓐ Ⓑ Ⓒ Ⓓ

2605

2603

2607

2605

DISPLAY
DETAILED
INFORMATION
⇨

2600

Ⓒ

2609

KANSHUN-DO 93m

A confectionery store
where you can experience
making Japanese confection
2013.08.02 Yuko

An event is held for a
limited time !
2013.08.01 Tomo

INTERESTING ☑

Ⓒ Ⓓ

2607

2605

**FIG. 13**

## INTERNATIONAL SEARCH REPORT

| | International application No. |
|---|---|
| | PCT/JP2015/060570 |

**A. CLASSIFICATION OF SUBJECT MATTER**
*G01C21/26*(2006.01)i, *G06Q50/10*(2012.01)i

According to International Patent Classification (IPC) or to both national classification and IPC

**B. FIELDS SEARCHED**

Minimum documentation searched (classification system followed by classification symbols)
G01C21/26, G06Q50/10

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-190683 A (Denso IT Laboratory, Inc.), 02 September 2010 (02.09.2010), | 1-2,7-8, 12-13 |
| Y | paragraphs [0051] to [0066]; all drawings (Family: none) | 3-4,9-11 |
| X | JP 2004-37269 A (Communications Research Laboratory), | 1-2,5-7, 12-13 |
| Y | 05 February 2004 (05.02.2004), entire text; all drawings & US 2005/0256885 A1 & WO 2004/005851 A1 & EP 1521057 A1 | 3-4,9-11 |
| X | JP 2010-266333 A (NTT Docomo Inc.), 25 November 2010 (25.11.2010), | 1-2,7-8, 12-13 |
| Y | paragraphs [0035] to [0062]; all drawings (Family: none) | 3-4,9-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 June 2015 (18.06.15) | 30 June 2015 (30.06.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/060570

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2011-137638 A  (Toshiba Corp.),<br>14 July 2011 (14.07.2011),<br>paragraphs [0050] to [0058]<br>(Family: none) | 3-4,9-11 |

Form PCT/ISA/210 (continuation of second sheet) (July 2009)

# EP 3 165 878 A1

**INTERNATIONAL SEARCH REPORT**

International application No.

PCT/JP2015/060570

A subject (hardware source) for carrying out each process and function is not specified in claim 12,13 and there is a high probability such that said claim 12,13 is deemed to be excluded from this international search. However, this search has been carried out on the assumption that each hardware source set forth in claim 1 exists in claim 12,13 as a hardware source (for example, an information acquisition unit and a control unit), taking the guideline prescribed under Chapter 9, 9.18, Part III in "PCT International Search and Preliminary Examination Guidelines" into consideration.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013064620 A